# EUROPÄISCHE PATENTSCHRIFT

(11) **EP 1 833 923 B1**
(45) Veröffentlichungstag und Bekanntmachung des Hinweises auf die Patenterteilung: **13.02.2013**
(21) Anmeldenummer: 05823167.1
(22) Anmeldetag: 19.12.2005
(51) Int. Cl.: C09C 1/00

(54) **MEHRSCHICHTIGES EFFEKTPIGMENT MIT ZENTRALER ABSORBERSCHICHT, VERFAHREN ZU DEREN HERSTELLUNG, VERWENDUNG DERSELBEN, BESCHICHTUNGSMITTEL UND BESCHICHTETER GEGENSTAND**
MULTILAYERED EFFECT PIGMENT COMPRISING A CENTRAL ABSORBER LAYER, METHOD FOR THE PRODUCTION THEREOF, USE OF THE SAME, COATING AGENT AND COATED OBJECT
PIGMENT A EFFET MULTICOUCHE A COUCHE D'ABSORBEUR CENTRALE, SON PROCEDE DE PRODUCTION, SON UTILISATION, AGENT DE REVETEMENT ET OBJET REVETU

(30) Priorität: 23.12.2004 DE 102004063433
(43) Veröffentlichungstag der Anmeldung: 19.09.2007
(73) Patentinhaber: Eckart GmbH, 91235 Hartenstein (DE)
(72) Erfinder: HERZING, Wolfgang, 91233 Speikern (DE); FISCHER, Martin, 92281 Königstein (DE); GEISSLER, Bernhard, 90592 Schwarzenbruck (DE); SCHUSTER, Thomas, 91207 Lauf (DE)
(74) Vertreter: Louis Pöhlau Lohrentz
(86) Internationale Anmeldenummer: PCT/EP2005/013649
(87) Internationale Veröffentlichungsnummer: WO 2006/069663

(56) Entgegenhaltungen:
- EP-A2- 1 270 683
- WO-A-2004/020530
- US-A- 5 570 847

## Beschreibung

Die vorliegende Erfindung betrifft metallisch glänzende farbige Effektpigmente mit zentraler Absorberschicht sowie Verfahren zur Herstellung derselben. Die Erfindung betrifft ferner die Verwendung dieser Effektpigmente, ein Beschichtungsmittel als auch beschichtete Gegenstände.

Mittels PVD-Verfahren (Physical Vapour Deposition) hergestellte mehrschichtige Effektpigmente sind beispielsweise aus der US 3,438,796 bekannt. Die US 3,438,796 offenbart fünfschichtige Interferenzpigmente mit einer zentralen, reflektierenden Aluminiumschicht, beidseitig flankiert von einer SiO₂-Schicht mit einer Schichtdicke von 100 bis 600 nm und abschließend je einer semitransparenten Absorberschicht aus Aluminium. Die zentrale Aluminiumschicht ist aufgrund einer Schichtdicke von über 60 nm opak und reflektierend. Die äußeren Absorberschichten aus Aluminium weisen Schichtdicken von unter 40 nm auf. Die aus der US 3,438,796 bekannten Effektpigmente weisen einen starken Farbflop, d.h. einen stark vom Betrachtungswinkel abhängigen Farbeindruck auf.

Die US 5,571,624 offenbart einen Lack, der mehrfarbige Interferenzpigmente enthält. Diese Interferenzpigmente besitzen eine zentrale metallische, reflektierende Schicht, die beidseitig von Schichtpaketen aus einem Dielektrikum und einer semiopaken Metallschicht flankiert sind, wobei die Dielektrikumschicht dem Reflektorkern zugewandt ist. Die Dielektrikumschichten besitzen dabei mindestens eine optische Schichtdicke von zwei Viertel einer ausgewählten Wellenlänge von 400 nm. Dies entspricht beispielsweise für eine SiO₂-Schich mit einem Brechungsindex von 1,55 einer geometrischen Mindestschichtdicke von 310 nm. Die aus der US 5,571,62 offenbarten Effektpigmente weisen ebenfalls einen starken Farbflop und relativ hohe Pigmentschichtdicken auf.

**Die** US 6,246,523 beschreibt die Herstellung von Mehrschichtpigmenten mit farbtonverschiebenden Eigenschaften. Diese Mehrschichtpigmente können dabei einen Schichtaufbau haben, bei dem beidseitig auf einer Dielektrikumschicht metallische Absorptionsschichten aufgebracht sind. Ein besonderes Merkmal dieser optisch variablen Pigmente, z.B. des Typs "Chromaflair" der Fa. Flex Products, Inc., ist neben einem sehr starken Farbflop eine extrem hohe Teilchendicke von etwa 1 µm. Aufgrund dieser hohen Teilchendicken sind derartige Pigmente für bestimmte Anwendungen, beispielsweise in der Druckindustrie und diversen Lackapplikationen, ungeeignet. Nachteilig ist ferner, daß diese Mehrschichtpigmente mit sehr starkem Farbflop hohe Schichtdicken aufweisen.

Die EP 0 472 371 A1 beschreibt einen optisch variablen Schichtaufbau, der durch Unterdrückung bestimmter Interferenzpeaks zu Interferenzpigmenten mit reineren Farbtönen führt. Diese Interferenzpigmente besitzen einen komplizierten asymmetrischen Schichtaufbau. Eine äußere Schicht besteht aus einem opaken metallischen Reflektor, auf dem mindestens zwei Schichtpakete, die jeweils aus einer Dielektrikumschicht und einer metallischen Absorberschicht bestehen, angeordnet sind.

Ein fünfschichtiger Pigmentaufbau mit einer zentralen opaken Reflektorschicht wird des weiteren in der WO 00/34395 beschrieben.

In der WO 99/35194 wird ein helles Metallpigment mit einer zentralen opaken Metallschicht und einem dreischichtigen Aufbau beschrieben, welches ebenfalls durch PVD-Verfahren hergestellt wird.

Die WO2004/020530 offenbart mehrschichtige Pigmente bestehend aus einem metallischen Kern (Al), der symmetrisch mit dielektrischen Schichten beschichtet ist. Die Herstellung des Pigmentes erfolgt mittels PVD.

Die EP1270683 betrifft ein PVD Pigment, umfassend Metallschichten und mindestens ein Schichtpaket (A) aus einer farblosen dielektrischen Schicht aus einem Material mit einer Brechzahl n <= 1,8 und einer farblosen dielektrischen Schicht aus einem Material mit einer Brechzahl n > 1,8, sowie eine selektiv oder nicht selektiv absorbierende Schicht (B).

Effektpigmente mit einem opaken Kern aus Aluminium sind u.a. unter dem Handelsnamen "Variocrom^{®}" auf dem Markt erhältlich und werden von der BASF AG angeboten. Hier wird zunächst eine dicke, niedrig brechende SiO₂-Schicht nasschemisch mittels Sol-Gel-Verfahren auf Aluminiumpigmente aufgefällt, und anschließend wird auf die mit SiO₂ versehenen Aluminiumpigmente im Wirbelbettverfahren aus Eisenpentacarbonyl eine Eisenoxidschicht aufgebracht. Der Aluminiumkern dient hierbei als Reflektormaterial und erhöht als völlig opakes Material im Vergleich zu transparenten Perlglanzpigmenten das Deckvermögen wesentlich. Die SiO₂-Schicht dient als niedrigbrechende Interferenzstrecke. Auf dem Markt befindliche Produkte ("Magic Red^{™} und Magic Gold^{™}") haben SiO₂-Schichtdicken von 320 bis ca. 400 nm. Die Schichten werden hier aus Gründen der Optik möglichst homogen aufgetragen, um starke Interferenzeffekte zu ermöglichen. Dies führt zu Effektpigmenten mit starken Farbflops, die bis in den Komplementärfarbenbereich führen. Derart starke Effekte sind jedoch keineswegs immer erwünscht und werden in vielen Anwendungen als zu "knallig" empfunden.

Im Stand der Technik sind auf vielfältigste Weise mehrschichtige optisch variable Effektpigmente mit einem starken Farbflop beschrieben. Allen bisher beschriebenen Interferenzpigmenten gemeinsam ist stets eine zentrale opake metallische Reffektorschicht. Die Reflektorschicht weist dabei jedenfalls eine Schichtdicke auf, so daß sie für sichtbares Licht opak ist und daher eine maximale, der Natur des verwendeten Metalls entsprechende, Reflexion von einfallendem Licht bewirkt.

Bei den bekannten optisch variablen Effektpigmenten wird die Dicke der Dielektrikumschichten derart eingestellt, daß sich Interferenzerscheinungen der 2. oder einer höheren Ordnung ausbilden, da diese intensiver und farbreiner als jene der ersten Ordnung sind.

Ein Nachteil derartiger Interferenzpigmente liegt darin, dass für die Interferenzerscheinungen nur immer die eine, in einem Anwendungsmedium, beispielsweise einem auf einer Substratoberfläche aufgebrachten Lackfilm, nach planparalleler Ausrichtung der Effektpigmente oben liegende Seite , d.h. die von der Substratoberfläche abgewandte Seite bzw. die dem einfallenden Licht zugewandte Seite des Interferenzpigmentes, für direkte Interferenzeffekte zur Verfügung steht. Die unten liegende Seite der Interferenzpigmente ist am optischen Effekt nicht beteiligt, da die zentrale Metallschicht opak ist und mithin das Licht nicht durchläßt, sondern vollständig reflektiert. Die unten liegende Seite der Interferenzpigmente kann nur durch Sekundäreffekte, wie die Reflexion an mehreren im Anwendungsmedium übereinander gestapelten Effektpigmenten, optisch aktiv werden.

Die bisher bekannten Interferenzpigmente sind somit unnötig dick, da die untere Seite der Pigmente für die primären Interferenzerscheinungen nicht genutzt werden kann. Dies ist auch im Hinblick auf die hohen Kosten von PVD-Verfahren nachteilig, da hier unnötig viel Material verschwendet wird.

Die Gesamtdicke der bislang bekannten Effektpigmente führt auch zu einem niedrigen, d.h. ungünstigen Formfaktor. Der Formfaktor ist als das Verhältnis der Längsausdehnung der Teilchen zu ihrer Dicke definiert. Ein niedriger Formfaktor verschlechtert die für den visuellen Eindruck eines Betrachters wesentliche Orientierung der Effektpigmente, d.h. deren zur Substratoberfläche erwünschten planparallelen Ausrichtung im Anwendungsmedium. Eine verschlechterte Orientierung der Effektpigmente im Anwendungsmedium führt zu einer Beeinträchtigung der optischen Eigenschaften der Effektpigmente im Anwendungsmedium, beispielsweise in einem Lackfilm.

Aus der WO 2004/052999 sind beschichtete Effektpigmente mit einer zentralen Aluminiumschicht mit einer Schichtdicke von 10 nm bis 100 nm und einer SiO₂-Beschichtung mit einer Schichtdicke von 200 nm bis 500 nm bekannt.

Nachteilig ist, daß die aus der WO 2004/052999 bekannten Pigmente mit Farbflop eine signifikante Pigmentgesamtdicke aufweisen und mithin deren Herstellung entsprechend teuer ist.

Es gibt mithin einen Bedarf an Effektpigmenten mit Farbflop, die die genannten Nachteile nicht aufweisen. Weiterhin besteht ein Bedarf an optisch hochwertigen, im wesentlichen einfarbigen metallischen Effektpigmenten, die keinen bzw. keinen wesentlichen Farbflop aufweisen. Ferner besteht ein Bedarf an optisch hochwertigen metallischen Effektpigmenten mit grauem oder schwarzem Erscheinungsbild ohne Farbe und ohne Farbflop.

Weiterhin sollte ein Verfahren zur Herstellung derartiger Effektpigmente gefunden werden.

Die der Erfindung zugrundeliegende Aufgabe wird durch Bereitstellung eines mehrschichtigen PVD-Effektpigments gelöst, wobei das mehrschichtige PVD-Effektpigment folgende Schichtenfolge umfasst:
(a) Dielektrikumschicht mit einer geometrischen Dicke von 25 nm bis maximal 180 nm,
(b) metallische Absorberschicht mit einer geometrischen Dicke von maximal 35 nm,
(c) Dielektrikumschicht mit einer geometrischen Dicke von 25 nm bis maximal 180 nm,
wobei die Schichten unmittelbar aufeinander folgen und die Dielektrikumschichten (a) und (c) gleich oder voneinander verschieden sind.

Bevorzugte Weiterbildungen sind in den Unteransprüchen angegeben.

Die vorliegende Erfindung betrifft mehrschichtige Effektpigmente, die eine zentrale Absorberschicht mit semitransparenten Eigenschaften aufweist.

Unter Effektpigmenten wird im Sinne der Erfindung verstanden, daß die Pigmente plättchenartig sind, so dass sie in einem Anwendungsmedium, beispielsweise einem Lack, einer Farbe, einer Kosmetik, etc., als eine Vielzahl kleiner teiltransparenter Spiegel wirken und sich im Anwendungsmedium hervorragend orientieren bzw. ausrichten. Die Effektpigmente sind mithin nicht sphärisch, sondern flächig ausgebildet. Das an den verschiedenen Schichten des Schichtaufbaus der erfindungsgemäßen Effektpigmente reflektierte Licht wird aufgrund der flächigen Struktur der Effektpigmente gerichtet reflektiert. Um bei einem Betrachter einen angenehmen visuellen Eindruck hervorzurufen, ist es wesentlich, daß sich die Pigmente in etwa planparallel zur Substratoberfläche ausrichten, damit das einfallende Licht von allen Pigmenten gerichtet reflektiert, d.h. nicht in die verschiedensten Richtungen gestreut wird. Im Fall eines mindestens fünfschichtigen Schichtaufbaus der erfindungsgemäßen Effektpigmente kann es durch Überlagerung des reflektierten Lichtes zu Interferenzeffekten kommen, die von einem Betrachter wahrgenommen werden.

Die metallische Absorberschicht (b) ist nicht opak, sondern teiltransparent, vorzugsweise beträgt der durch die metallische Absorberschicht transmittierte Anteil des einfallenden Lichts weniger als 70 %, weiter bevorzugt weniger als 50 %, noch weiter bevorzugt weniger als 30 % jeweils bezogen auf das einfallende Licht. Der durch die metallische Absorberschicht transmittierte Anteil des einfallenden Lichtes beträgt wenigstens 10 %, vorzugsweise wenigstens 15 %, jeweils bezogen auf das einfallende Licht.

Im einzelnen hängt der Transmissionsgrad von der Art des Absorbers und von seiner Schichtdicke ab. Die Werte beziehen sich auf Mittelwerte der Transmission über den Wellenlängenbereich von 400 bis 800 nm des einfallenden Lichtes.

Unter dem Begriff "zentrale Absorberschicht" wird im Sinne der Erfindung verstanden, daß die metallische Absorberschicht innerhalb des erfindungsgemäßen Pigments angeordnet ist. Der Schichtaufbau des gesamten Pigmentes kann in bezug auf die Lage der metallischen Absorberschicht symmetrisch oder asymmetrisch sein. Vorzugsweise ist der Schichtaufbau bezogen auf die Lage der metallischen Absorberschicht symmetrisch.

Metallfilme verlieren unterhalb einer geometrischen Schichtdicke von weniger als 40 nm ihren hohen Reflexionsgrad, bleiben jedoch aufgrund ihrer außerordentlich hohen Absorption von elektromagnetischen Wellen im sichtbaren Wellenlängenbereich noch starke Absorber. Bei sehr dünnen Schichtdicken erscheinen die Metallfilme einem Betrachter als grau bis schwarz. Die erfindungsgemäßen mehrschichtigen Interferenzpigmente besitzen zentrale metallische Absorberschichten mit geometrischen Schichtdicken von maximal 35 nm. Gemäß einer weiteren bevorzugten Ausführungsform weist die metallische Absorberschicht eine geometrische Dicke von maximal 30 nm, weiter bevorzugt von 2 bis 20 nm, auf. Unterhalb von 2 nm Schichtdicke sind die Metallschichten zu dünn. Hier ist eine zu hohe Transparenz der Metallschicht gegeben. Ferner lassen sich die Effektpigmente bei einer Schichtdicke von weniger als 2 nm nur sehr schwer mechanisch stabilisieren. Außerdem könnten Pigmente mit einer Schichtdicke bei der metallischen Absorberschicht von weniger als 2 nm nicht mit reproduzierbarer optischer Qualität hergestellt werden.

Als Metalle werden für die metallische Absorberschicht vorzugsweise Aluminium, Silber, Kupfer, Gold, Chrom, Eisen, Titan, Platin, Palladium, Nickel, Kobalt, Niob, Zinn, Zink, Rhodium deren Mischungen, Legierungen und Kombinationen verwendet. Bevorzugt werden Aluminium, Silber, Kupfer, Gold, Chrom, Eisen, Titan, deren Mischungen, Legierungen und Kombinationen verwendet.

Unter Kombinationen von Metallschichten werden im Sinne der Erfindung zwei, drei, vier oder mehr aufeinanderfolgende Metallschichten, die jeweils vorzugsweise diskret sind, verstanden. Die Gesamtschichtdicke dieser aufeinanderfolgenden Schichten muß jedoch unter 40 nm liegen, damit eine Teiltransparenz des Schichtaufbaus gegeben ist.

Unter Mischungen wird im Sinne der Erfindung verstanden, daß die Metalle gemeinsam aufgebracht sind, jedoch aufgrund einer thermodynamischen Mischungslücke keine Legierung bilden.

Bevorzugt werden erfindungsgemäß Legierungen aus zwei, drei, vier oder mehr Metallen verwendet, bei denen eine entsprechende thermodynamische Stabilität gegeben ist.

Die zentrale Absorberschicht ist beidseitig mit einer Dielektrikumschicht mit einer geometrischen Schichtdicke von jeweils 25 nm bis maximal 180 nm versehen. Als Dielektrikum werden vorzugsweise Metallfluoride, Metalloxide, Metallsulfide, Metallnitride, Metallcarbide, deren Mischungen und Kombinationen verwendet. Bevorzugt sind hierbei insbesondere Metalloxide. Weiterhin bevorzugt umfaßt das Dielektrikum SiO₂, SiOₓ, wobei x 1,5 bis 2 ist, Al₂O₃, B₂O₃, TiO₂, ZrO₂, MgF₂ sowie deren Kombinationen oder Mischungen. Vorzugsweise besteht das Dielektrikum aus den vorgenannten Materialien. Im Fall von SiOₓ ist x bevorzugt 1,7 bis 2 und besonders bevorzugt 1,95 bis 2. Der Zahlenwert für x kann ein diskreter Zahlenwert sein oder aber auch ein Bereich sein, beispielsweise von 1,95 bis 2. Dies kann beispielsweise mittels EDX-Analysen (EDX: Elemental Detection by X-ray Analysis) gemessen werden.

Bevorzugt weisen die Dielektrikumschichten jeweils eine geometrische Schichtdicke von maximal 150 nm auf. Gemäß einer weiteren bevorzugten Weiterbildung liegt die Dicke der Dielektrikumschicht in einem Bereich von jeweils 30 nm bis maximal 100 nm.

Gemäß einer weiteren bevorzugten Ausführungsform sind die beidseitig auf der metallischen Absorberschicht angeordneten Dielektrikumschichten jeweils mit einer semitransparenten Schicht versehen, so daß sich folgender Schichtaufbau ergibt:
(d) semitransparente Schicht,
(a) Dielektrikumschicht,
(b) metallische Absorberschicht,
(c) Dielektrikumschicht,
(e) semitransparente Schicht,
wobei die semitransparenten Schichten (d) und (e) unmittelbar auf den Dielektrikumschichten (a) und (c) aufgebracht sind und gleich oder voneinander verschieden sind.

Gemäß einer bevorzugten Weiterbildung der Erfindung weisen die semitransparenten Schichten (d) und (e) einen Brechungsindex von mehr als 2,2 auf. Bevorzugt umfassen die semitransparenten Schichten (d) und (e) Metall oder bestehen daraus. Gemäß einer weiteren bevorzugten Ausführungsform bestehen die semitransparenten Schichten (d) und (e) aus den gleichen Materialien wie die oben aufgeführte zentrale metallische Absorberschicht.

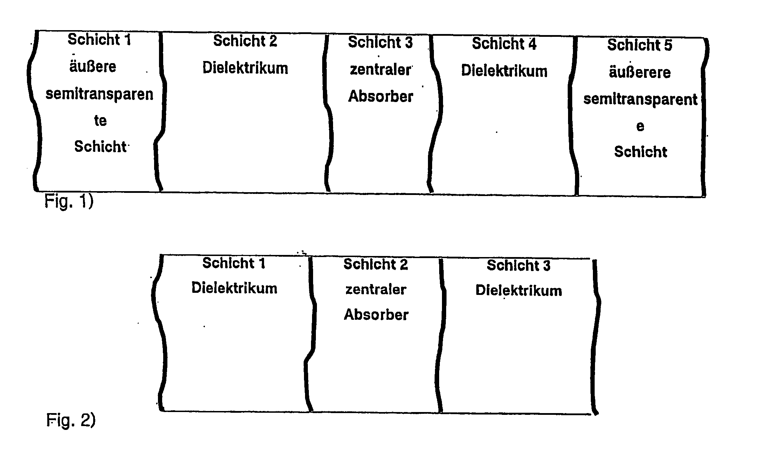

Jede der Schichten des mehrschichtigen Interferenzpigmentes trägt zur Farbgebung bei. Über die Anzahl an Schichten sowie die Schichtdicken ist die Farbe des Interferenzpigmentes einstellbar. Die Farbe des Interferenzpigmentes kann erfindungsgemäß durch Variation der Schichtdicke der Dielektrikumschichten, der gegebenenfalls vorhandenen semitransparenten Schichten und/oder der Schichtdicke der metallischen Absorberschicht gezielt eingestellt werden. Die in den nachfolgenden Beispielen angegebenen Bezugszeichen beziehen sich auf den in Figur 1 dargestellten beispielhaften Schichtaufbau.

**Beispiel A:** Einstellung der resultierenden Farbe durch Variation der Dielektrikum-Schichtdicken (2,4) bei konstant eingestellten Schichtendicken der semitransparenten Schichten (1) bzw. (5) und konstanter zentraler Absorberschichtdicke (3).

### Schichtaufbau Modell 1:

Al(14 nm) - SiOₓ(80 nm)-Al(30 nm) - SiOₓ(80 nm)-Al(14 nm)

Dieser Schichtaufbau ermöglicht die Realisierung von goldfarbenen Pigmenten. Bei stetiger Steigerung der jeweiligen SiOₓ-Dicken, wobei x =1,95 - 2,0 ist, von 80 nm bis z.B. 130 nm lässt sich ein Farbverlauf von gold, violett, blau grün des mehrschichtigen Interferenzpigmentes darstellen. Zur Farbeinstellung dienen hier die jeweiligen Interferenzstrecken, die durch die SiOₓ-Schichten eingestellt werden.

**Beispiel B:** Einstellung der gewünschten Farbe über die außenliegenden Schichtdicken der semitransparenten Schichten (1) und (5) bei konstanter Dielektrikum-Schichtdicke (2) und (4) und konstanter zentraler AbsorberSchichtdicke (3)

### Schichtaufbau Modell 2:

Al(18 nm) - SiOₓ(80 nm)-Al(30 nm) - SiOₓ(80 nm)-Al(18 nm); wobei x = 1,95 - 2,0 ist.Dieser Schichtaufbau ermöglicht die Realisierung von goldfarbenen Pigmenten. Bei stetiger Abnahme der Schichtdicken der beiden außenliegenden semitransparenten Al-Schichten von 18 nm bis 10 nm und unter Konstanthaltung der Dicke der anderen Schichten bewirkt dies einen Farbverlauf von gold nach goldrot nach violett nach blau.

**Beispiel C:** Einstellung der gewünschten Farbe auf Grund der Änderung der Dicke der zentralen Absorberschicht (3) bei konstanten Schichtdicken für die außenliegenden semitransparenten Schichten (1) und (5) und den intermediär angeordneten Dielektrikumschichten (2) bzw. (4).

### Schichtaufbau Modell 3.1:

Al(11 nm) - SiOₓ(82 nm)-Al(35 nm) - SiOₓ(82 nm)-Al(11 nm); wobei x = 1,95 - 2,0 ist.Dieser Schichtaufbau ermöglicht die Realisierung von violetten Pigmenten. Durch stetige Abnahme der Dicke der zentralen Absorberschicht von 35 nm auf 5 nm und unter Konstanthaltung der Dicke der anderen Schichten wird ein Farbverlauf von violett nach violett-rot nach blau nach grün nach gold beobachtet.

In diesem Fall wird die Farbänderung primär durch die Variation der Dicke der zentralen Absorberschicht hervorgerufen. Durch die Abnahme der Dicke der zentralen Absorberschicht wird die Absorberschicht transparenter. Hierdurch können die Interferenzstrecken der Dielektrikumschichten aneinander gekoppelt werden.

Vorteilhaft wirkt sich auch hier aus, dass die zentrale Metallschicht unterhalb einer Schichtdicke von 20 nm dunkler wird. Dadurch wird ein Teil des Weißlichtsockels des einfallenden Lichtes absorbiert, was wiederum die Interferenzfarben stärker hervorkommen lässt.

### Schichtaufbau Modell 3.2:

Al(12 nm) - SiOₓ(39 nm)-Al(35 nm) - SiOₓ(39 nm)-Al(12 nm); wobei x = 1,95 - 2,0 ist.Dieser Schichtaufbau ermöglicht die Realisierung von silberfarbenen Pigmenten, auch bei stetiger Abnahme der zentralen Absorberschichtdicke von 35 nm auf 18 nm. In diesem Fall ist die zentrale Absorberschichtdicke, gekoppelt mit den anderen Schichtdicken, nahezu opak, um ein stärkeres Interferieren mit den beiden sehr dünn gewählten Dielektrikumschichten zu vermeiden.

Erst bei ca. 15 nm -5 nm Schichtdicke der zentralen Absorberschicht wird ein Farbverlauf von gold nach rosa nach violett beobachtet, und der Einfluss der transparenten zentralen Absorberschicht wird deutlich.

**Beispiel D:** Einstellung der gewünschten Farbe bei einer konstanten Pigmentdicke durch Verschieben der zentralen Schicht (3) und der damit verbundenen Verringerung bzw. Erhöhung der Schichtdicke der Schichten (2) und (4). Die Schichtdicken der Dielektrikumschichten (2) und (4) können mithin unterschiedlich sein.

**Beispiel E:** Zusätzlich wirkt sich die Wahl der Materialien der äußeren semitransparenten Schichten und die Wahl des Absorbermaterials charakteristisch auf die resultierende Farbe des Pigments aus.

Die Vorteile der erfindungsgemäßen mehrschichtigen Interferenzpigmente liegen in ihrer metallisch glänzenden Farbigkeit mit Farbflop oder ohne Farbflop oder mit einer leichten Farbtonverschiebung, ihrer mechanischen Stabilität und einer hohen Ergiebigkeit bzw. einem hohen Deckvermögen. Das hohe Deckvermögen resultiert aus der geringen Pigmentdicke, so daß pro Gewichtseinheit mehr erfindungsgemäße Pigmente, die zur Deckung beitragen können, vorliegen, als dies bei den herkömmlichen Pigmenten mit großer Gesamtdicke der Fall ist. Durch die optionale Farbgebung gemäß den obigen Beispielen A-E ist eine Vielzahl von unterschiedlichsten Farbreihen realisierbar. Im Unterschied zu den Pigmenten im Stand der Technik zeichnen sich die Pigmente durch ihre außerordentlich geringe Pigmentgesamtdicke aus. Dies ermöglicht zum einen eine preisgünstigere Herstellung, da weniger Ausgangsmaterial verwendet wird und verkürzt zum anderen die Herstellungsdauer. Schließlich wird bei einer geringeren Pigmentgesamtdicke das Deckvermögen verbessert, da pro Gewichtseinheit Pigment eine größere Fläche mit Pigment abgedeckt wird. Insbesondere wird in einer Beschichtung bei vergleichsweise dünnen Pigmenten eine bessere planparallele Orientierung und damit einhergehend bessere optische Eigenschaften wie bspw. höherer Glanz erreicht. Wie vorstehend erläutert, ermöglicht die vorliegende Erfindung in Abhängigkeit von den gewählten Ausgangsmaterialien und den einzelnen dünnen Schichtdicken die Herstellung von Pigmenten mit Farbflop sowie ohne wesentlichen Farbflop.

Bei der vorliegenden Erfindung wird im Unterschied zum Stand der Technik auf längere Interferenzstrecken verzichtet, d.h. von sehr dicken Dielektrikumschichten, wie z.B. SiO₂-Schichten mit einer Dicke von 200 nm und mehr abgesehen.

Die farbliche Erscheinung des Effektpigmentes kann auch durch das Einstellen der Dicke von äußeren semitransparenten Schichten und zusätzlich auch über die Dicke der zentralen metallischen Absorberschicht erfolgen.

Bei der vorliegenden Erfindung sind mithin überraschenderweise Farbreihen realisierbar, bei denen die jeweiligen effektiven Schichtdicken der einzelnen Schichten nur geringfügig voneinander abweichen. Bei einer konstanten Gesamtdicke des Pigments kann über eine Variation und Kombination der Schichtdicken der einzelnen Schichten eine große Anzahl von Effektpigmenten mit verschiedensten Farbgebungen erhalten werden. Diese Pigmente können dabei keinen, einen nur unwesentlichen oder einen deutlichen Farbflop aufweisen.

Die vorliegende Erfindung ermöglicht mithin die Bereitstellung von farbig und metallisch glänzenden Effektpigmenten mit einem breiten Spektrum an Farbflops bei geringen Effektpigmentdicken. Die Farbflops können zwischen schwachem und deutlichem Farbflop liegen. Überraschenderweise ist auch die Bereitstellung von Effektpigmenten ohne oder ohne wesentlichen Farbflop möglich. Äußerst vorteilhaft weisen die erfindungsgemäßen Effektpigmente mithin eine Gesamtdicke von vorzugsweise weniger als 500 nm, weiter vorzugsweise von weniger als 400 nm auf. Gemäß einer weiteren bevorzugten Ausführungsform liegt die Gesamtdicke der erfindungsgemäßen Effektpigmente bei weniger als 350 nm, weiter bevorzugt bei weniger als 300 nm, noch weiter bevorzugt bei weniger als 250 nm. Vorzugsweise liegt die Gesamtdicke der erfindungsgemäßen Effektpigmente in einem Bereich von 100 nm bis 200 nm.

Die zentrale metallische Absorberschicht weist eine geometrische Schichtdicke bevorzugt unter 35 nm und besonders bevorzugt von 2 bis 20 nm auf. In Abhängigkeit von der Schichtdicke der metallischen Absorberschicht haben die erfindungsgemäßen Effektpigmente ein optisch hochwertiges metallfarbenes oder optisch hochwertiges graues oder optisch hochwertiges schwarzes Aussehen.

Je nach Wahl der metallischen Absorberschicht und deren Schichtdicke lassen sich die genannten Effektpigmente erzielen.

Hochglänzende metallische Effektpigmente mit ihrer charakteristischen Farbe lassen sich sehr gut mit den vorzugsweise als metallischen Absorber verwendeten Metallen Aluminium, Silber, Kupfer oder Gold sowie deren Kombinationen, Mischungen und Legierungen mit einer Schichtdicke von vorzugsweise ca. 20 - 28 nm, weiter bevorzugt von ca. 25 nm darstellen. Als beidseitig flankierende Dielektrikumsschichten werden vorzugsweise SiO₂-Schichten mit einer Schichtdicke von vorzugsweise jeweils 60 - 100 nm, weiter bevorzugt von jeweils 80 nm verwendet.

Der Schichtaufbau SiOₓ(80 nm)-Al(25 nm) - SiOₓ(80 nm) mit x = 1,95 - 2,0 erzeugt ein hochglänzendes silberfarbenes Pigment. Bei Verwendung von Ag statt Al wird ebenfalls ein hochglänzendes silberfarbenes Pigment erzeugt.

Der Schichtaufbau SiOₓ(80 nm)-Au(30 nm) - SiOₓ(80 nm) erzeugt ein hochglänzendes goldfarbenes Pigment. Bei Verwendung von Cu statt Au wird ein hochglänzendes kupferfarbenes Pigment erzeugt.

Optisch hochwertige graue bis schwarze Pigmente lassen sich bei einer zentralen Absorberschichtdicke von maximal 20 nm darstellen. Das erfindungsgemäße PVD-Pigment umfaßt in diesem Fall folgenden Aufbau: (a) Dielektrikumschicht mit einer geometrischen Dicke von 25 nm bis maximal 180 nm, (b) metallische Absorberschicht mit einer geometrischen Dicke von 2 nm bis 20 nm, (c) Dielektrikumschicht mit einer geometrischen Dicke von 25 nm bis maximal 180 nm, wobei die Schichten unmittelbar aufeinander folgen und das mehrschichtige PVD-Effektpigment ein glänzendes graues bis schwarzes Erscheinungsbild aufweist. Als beidseitig flankierende Schichten sind vorzugsweise SiO₂-Schichten mit einer Schichtdicke von vorzugsweise 60 bis 100 nm, weiter bevorzugt von jeweils 80 nm aufgebracht. Vorzugsweise weist die metallische Absorberschicht eine Schichtdicke von 5 bis 18 nm, weiter bevorzugt von 8 bis 15 nm, auf.

Bei diesen grauen bis schwarzen Effektpigmenten werden vorzugsweise keine semitransparenten Schichten (d) und (e) aufgebracht. Die grauen bis schwarzen Effektpigmente weisen vorzugsweise nur einen dreischichtigen Aufbau aus metallischer Absorberschicht (b) und beidseitig aufgebrachten Dielektrikumschichten (a) und (c) auf. Selbstverständlich können die grauen bis schwarzen Pigmente auch weiter optisch nicht aktive Schutzschichten aufweisen.

Es werden in allen Fällen teiltransparente metallische Effektpigmente erzeugt. Ihr metallischer Effekt wird z.B. in Lackanwendungen sichtbar. Hier liegen mehrere planparallele Schichten übereinander und addieren sich zum jeweiligen metallischen Aussehen.

Weiterhin wirken sich die effektiv niedrigen Gesamtschichtdicken positiv auf das optische Verhalten aus. Anhand von Lichtmikroskopaufnahmen lässt sich zeigen, dass sich vor allem auch grobe Flakes mit einem mittleren Teilchendurchmesser D₅₀ von 35 µm wie dünne Platten planparallel in der Applikation überlappend, neben und aneinander liegen. Durch die Kombination eines hohen Formfaktors der erfindungsgemäßen Effektpigmente und ihrer optimalen Orientierung in Lackanwendungen lassen sich deutliche Glanzsteigerungen erzielen.

Die erfindungsgemäßen mehrschichtig aufgebauten Effektpigmente können mit weiteren, das optische Verhalten der oben genannten Schichtzusammensetzung praktisch nicht beeinflussenden Schichten, die dem Korrosionsschutz und der chemischen Stabilisierung dienen, belegt sein. Zusätzlich kann eine Modifikatorschicht beispielsweise aus Phosphorsäureestem, Phosphoniumverbindungen, Silanen, Carbonsäuren und anderen Verbindungen aufgebracht sein. Besonders bevorzugt als Korrosionsschutz sind umhüllende, insbesondere auch die metallischen Bruchkanten vollständig überdeckende, vorzugsweise naßchemisch aufgebrachte, SiO₂-Schichten Die SiO₂-Schichten werden bevorzugt über Sol-Gel-Verfahren aufgebracht. Diese werden in organischen Lösemitteln, die zu mindestens 50 Gew.-%, bevorzugt mindestens 80 Gew.-% aus organischen Lösemitteln bestehen, aufgebracht. Besonders bevorzugt sind solche mit SiO₂- nachbeschichteten Pigmente noch mit wenigstens einem organofunktionellen Silan oberflächenmodifiziert. Über ein solches organofunktionelles Silan kann eine chemische Einbindung der erfindungsgemäßen Effektpigmente in einen Lackfilm bewirkt werden. Bei der chemischen Einbindung erfolgt eine kovalente Verbindung von Effektpigment und Bindemittelsystem bspw. eines Lacks oder einer Farbe.

Das Aufbringen einer oder mehrerer gegenüber Korrosion schützenden und/oder modifizierenden zusätzlichen Schichten ist sowohl über Vakuumverfahren als auch über nasschemische Beschichtung möglich, wobei naßchemische Beschichtungen bevorzugt sind.

Der Durchmesser der erfindungsgemäßen farbigen Metalleffektpigmente liegt im Bereich von 1 bis 250 µm, vorzugsweise von 2 bis 200 µm und insbesondere von 5 bis 50 µm.

Der Formfaktor, d.h. das Verhältnis von Pigmentdurchmesser zu Pigmentdicke, der erfindungsgemäßen farbigen Metalleffektpigmente liegt bevorzugt zwischen 40 und 1000 und besonders bevorzugt zwischen 100 und 400.

Die aufgrund der geringen Schichtdicken hohen Formfaktoren sorgen für eine sehr gute planparallele Orientierung der erfindungsgemäßen Effektpigmente im Anwendungsmedium. Hieraus und aus den sehr glatten, im Sinne von optischen Streueffekten störungsfreien Pigmentoberflächen resultieren hervorragende Glanzeigenschaften.

Es sind mithin hochglänzende, farbige Effektpigmente ohne Farbflop bzw. mit einem sehr geringen Farbflop zugänglich.

Die der Erfindung zugrundeliegende Aufgabe wird ferner durch Bereitstellung eines Verfahrens zur Herstellung eines mehrschichtigen PVD-Effektpigmentes gelöst, das die folgenden Schritte umfaßt:
a) Aufbringen der Dielektrikumschicht (a) mittels PVD auf ein geeignetes Trägermaterial,
(b) Aufbringen der metallischen Absorberschicht (b) mittels PVD auf die in Schritt (a) aufgebrachte Dielektrikumschicht (a),
(c) Aufbringen der Dielektrikumschicht (c) mittels PVD auf die in Schritt (b) aufgebrachte Metallschicht (b),
(d) Abtrennen des aufgebrachten Schichtpaketes von dem Trägermaterial,
(e) Zerkleinern der Schichtpakete auf eine gewünschte Pigmentpartikelgröße.

Die der Erfindung zugrundeliegende Aufgabe wird auch durch Bereitstellung eines Verfahrens zur Herstellung eines mehrschichtigen PVD-Effektpigmentes, gelöst, das folgende Schritte umfaßt:
a) Aufbringen der semitransparenten Schicht (d) mittels PVD auf ein geeignetes Trägermaterial,
b) Aufbringen der Dielektrikumschicht (a) mittels PVD auf die in Schritt a) aufgebrachte semitransparente Schicht (d),
c) Aufbringen der metallischen Absorberschicht (b) mittels PVD auf die in Schritt b) aufgebrachte Dielektrikumschicht (a),
d) Aufbringen der Dielektrikumschicht (c) mittels PVD auf die in Schritt c) aufgebrachte Metallschicht (b),
e) Aufbringen der semitransparenten Schicht (e) mittels PVD auf die in Schritt d) aufgebrachte Dielektrikumschicht (c)
f) Abtrennen des aufgebrachten Schichtpaketes von dem Trägermaterial,
g) Zerkleinern der Schichtpakete auf eine gewünschte Pigmentpartikelgröße.

Bevorzugte Weiterbildungen des erfindungsgemäßen Verfahrens sind in den Unteransprüchen angegeben.

Als Trägermaterial können sämtliche üblicherweise bei PVD-Verfahren verwendete Trägermaterialien, wie Folien oder Gewebe, verwendet werden.

Die für das optische Verhalten bestimmenden Schichten sind über gängige PVD-Aufdampfverfahren hergestellt. Als Verfahren kommen die gängigen PVD-Aufdampfverfahren mit oder ohne Reaktivgas bzw. Plasmaaktivierung, Elektronenstrahltechnologie oder widerstands- bzw. strahlungsbeheizte Verfahren zur Anwendung, die in "Vakuumbeschichtung Band I-V" (VDI Verlag, Hrsg.:G. Kienel) ausführlich beschrieben werden.

Sowohl für mehrschichtige Interferenzpigmente als auch metallische Effektpigmente sind mechanische Stabilität und Farbstärkeintensivierung über die optischen Konstanten bzw. die Schichtdicke, die Aufdampfbedingungen bzw. eine mögliche Dotierung oder Nachbeschichtung zugänglich.

Die Aufgabe-der Erfindung wird auch durch die Verwendung eines erfindungsgemäßen PVD-Effektpigmentes in Farben, Lacken, Coatings, Druckfarben, Kunststoffen, kosmetischen Zubereitungen, Pigmentpräparationen, im Sicherheitsdruck oder Wertpapierdruck gelöst.

Vorzugsweise werden die erfindungsgemäßen Effektpigmente in kosmetischen Zubereitungen, die aus der Gruppe, die aus Nagellack, Lippenstift, Make-up, Haarpflegemittel, Hautpflegemittel, Mascara, Lidschatten, Eyeliner, Rouge, Parfum, Eau de Toilette, Puder (lose oder gepresst), Tattooformulierungen besteht, ausgewählt werden, verwendet.

Die der Erfindung zugrundeliegende Aufgabe wird ferner durch ein Beschichtungsmittel, das ein erfindungsgemäßes PVD-Effektpigment enthält, gelöst. Gemäß einer bevorzugten Ausführungsform wird das Beschichtungsmittel aus der Gruppe, die aus Farben, Lacken, Coatings, Druckfarben, Kunststoffen, kosmetischen Zubereitungen, vorzugsweise Nagellack, und Pigmentpräparationen besteht, ausgewählt.

Die Aufgabe der Erfindung wird ferner durch einen Gegenstand, der mit einem erfindungsgemäßen PVD-Effektpigment oder einem erfindungsgemäßen Beschichtungsmittel versehen ist, gelöst. Der Gegenstand kann beispielsweise eine Karosserie, beispielsweise eine Kraftfahrzeugkarosserie, ein bedrucktes Substrat, beispielsweise Papier, Pappe, Holz, Kunststoff, eine Folie, Verpackung, ein künstlicher Fingernagel, ein Ausweis, ein Identifikationsdokument, Wertdokument, eine Banknote, etc. sein.

Trotz ihres mehrschichtigen Aufbaus orientieren sich die erfindungsgemäßen Pigmente in den jeweiligen Anwendungssystemen hervorragend. Die erfindungsgemäßen Pigmente sind mit einer Vielzahl von Anwendungssystemen, wie beispielsweise Lack, Druckfarben, Kosmetik und Kunststoffen, kompatibel.

Auf Grund ihres besonderen farbigen metallischen Glanzes sind sie insbesondere für den dekorativen Lackbereich, die Druckindustrie, die dekorative Kosmetik und den Sicherheitsbereich mit den verschiedensten Anwendungen geeignet.

Sie können bei der Herstellung von Pigmentpräparationen eingesetzt werden, welche insbesondere in Druckfarben, Lacken und Kunststoffen Verwendung finden.

Die nachfolgenden Beispiele und Figuren sollen die Erfindung näher erläutern, ohne sie jedoch zu beschränken.
Fig. 1 zeigt den schematischen Aufbau eines erfindungsgemäßen Effektpigments mit fünf Schichten.
Fig. 2 zeigt den schematischen Aufbau eines erfindungsgemäßen Effektpigments mit drei Schichten.
Fig. 3 zeigt die Deckung der Pigmente in Abhängigkeit von der Pigmentierungshöhe für die erfindungsgemäßen Beispiele 1-4 und die Vergleichsbeispiele 5 und 6.
Fig. 4 zeigt die Deckung der Pigmente in Abhängigkeit vom spezifischen Volumen für die erfindungsgemäßen Beispiele 1-4 und die Vergleichsbeispiele 5 und 6.
Fig. 5 zeigt die Darstellung des Farbflops durch Auftrag der H*-Werte gegen den Beobachtungswinkel für die erfindungsgemäßen Beispiele 1 und 2 sowie die Vergleichsbeispiele 5 und 6.

### Beispiel 1:

In einer PVD-Laboranlage wird eine Polyethylenterephthalat-(PET)-Folie von 23 µm Dicke, welche mit einem Releasecoat beschichtet ist, in fünf Durchgängen nacheinander mit einer 1. Schicht aus Silber, einer 2. Schicht aus Siliziumoxid, einer 3. Schicht aus Aluminium, einer 4. Schicht aus Siliziumdioxid und abschließend mit einer 5. Schicht aus Silber beschichtet.

Es werden für die Schichten 1-5 hierbei folgende geometrische Schichtdicken aufgedampft.

| | **Aufgedampfter Stoff** | **Schichtdicke [nm]** |
|---|---|---|
| **1. Schicht** | Ag | 18 |
| **2. Schicht** | SiOx | 70 |
| **3. Schicht** | Al | 25 |
| **4. Schicht** | SiOx | 70 |
| **5. Schicht** | Ag | 18 |

| | | |
|---|---|---|
| x = 1,95 - 2,0. | | |

Das Vakuum bei der Metallisierung liegt bei ca. 1*10⁻⁵ mbar. Der Releasecoat besteht aus acetonlöslichem Methylmethacrylatharz und wird in einem separaten Arbeitsschritt vorab aufgebracht.

Nach Beendigung des Beschichtungsvorganges wird das Vakuum aufgehoben, die metallisierte PET-Folie entnommen und die PET-Folie in einer separaten Ablöseeinheit mit Aceton abgelöst. Durch Auflösen der Releasecoatschicht wird die Beschichtung von der Folie abgetrennt. Die abgetrennten Schichtpakete werden abfiltriert und der entstehende Filterkuchen wird mit Aceton gewaschen, bis der Releasecoat entfernt ist.

Die gewaschenen Schichtpakete werden nun in einem geeigneten Lösemittel zerkleinert unter Bereitstellung einer Pigmentsuspension.

In der Pigmentsuspension sind goldglänzende Pigmentpartikel mit höchster Brillanz enthalten. Der d₅₀-Wert der Durchgangssummenverteilung der Teilchengröße, wie er mittels herkömmlicher Lasergranulometrie (Cilas 1064) gemäß Herstellerangaben gemessen wird, beträgt 29,8 µm.

### Beispiel 2:

In Beispiel 2 wird das gleiche Verfahren wie in Beispiel 1 angewandt. Es werden jedoch folgende Schichten mit ihren jeweiligen Schichtdicken aufgedampft.

| | **Aufgedampfter Stoff** | **Schichtdicke [nm]** |
|---|---|---|
| **1. Schicht** | Al | 9 |
| **2. Schicht** | SiOx | 93 |
| **3. Schicht** | Al | 20 |
| **4. Schicht** | SiOx | 93 |
| **5. Schicht** | Al | 9 |

| | | |
|---|---|---|
| x = 1,95 - 2,0 | | |

Die nach Aufbereitung (wie in Beispiel 1 beschrieben) erhaltene Pigmentsuspension enthält blauglänzende Pigmentpartikel höchster Brillanz. Der d₅₀-Wert der Durchgangssummenverteilung der Teilchengröße, wie er mittels herkömmlicher Lasergranulometrie gemäß Herstellerangaben gemessen wird, beträgt 27,8 µm.

### Beispiel 3:

In Beispiel 3 wird das gleiche Verfahren wie in Beispiel 1 angewandt. Es werden jedoch folgende Schichten mit ihren jeweiligen Schichtdicken aufgedampft.

| | **Aufgedampfter Stoff** | **Schichtdicke [nm]** |
|---|---|---|
| **1. Schicht** | Ag | 17 |
| **2. Schicht** | SiOx | 35 |
| **3. Schicht** | Ag | 17 |
| **4. Schicht** | SiOx | 35 |
| **5. Schicht** | Ag | 17 |

| | | |
|---|---|---|
| x = 1,95 - 2,0 | | |

Die nach Aufbereitung (wie in Beispiel 1 beschrieben) erhaltene Pigmentsuspension zeigt silberglänzende Pigmentpartikel höchster Brillanz. Der d₅₀-Wert der Durchgangssummenverteilung der Teilchengröße, wie er mittels herkömmlicher Lasergranulometrie gemäß Herstellerangaben gemessen wird, beträgt 27,4 µm.

### Beispiel 4:

In Beispiel 4 wird das gleiche Verfahren wie in Beispiel 1 angewandt. Es werden jedoch folgende Schichten mit ihren jeweiligen Schichtdicken aufgedampft.

| | **Aufgedampfter Stoff** | **Schichtdicke [nm]** |
|---|---|---|
| **1. Schicht** | SiOx | 82 |
| **2. Schicht** | Al | 22 |
| **3. Schicht** | SiOx | 82 |

| | | |
|---|---|---|
| x = 1,95 - 2,0 | | |

Die nach Aufbereitung (wie in Beispiel 1 beschrieben) erhaltene Pigmentsuspension zeigt silbergrauglänzende Pigmentpartikel höchster Brillanz. Der d₅₀-Wert der Durchgangssummenverteilung der Teilchengröße, wie er mittels herkömmlicher Lasergranulometrie gemäß Herstellerangaben gemessen wird, beträgt 28,6 µm.

### Vergleichsbeispiel 5: Variocrom Magic Gold (Fa. BASF AG)

Fünfschichtiges Interferenzeffektpigment mit einem Kern aus Aluminium, einer beidseitigen SiO₂-Schicht und einer semitransparenten Eisenoxidschicht. Die mittlere Teilchengröße beträgt 17 µm.

**Vergleichsbeispiel 6:** Chromaflair (Fa. Flex Products, Inc.): Mehrschichtiges Interferenzpigment, hergestellt durch PVD-Verfahren. Die mittlere Teilchengröße beträgt 19 µm.

**Beispiel 7:** In Beispiel 7 wird das gleiche Verfahren wie in Beispiel 1 angewandt. Es werden jedoch folgende Schichten mit ihren jeweiligen Schichtdicken aufgedampft.

| | **Aufgedampfter Stoff** | **Schichtdicke [nm]** |
|---|---|---|
| **1. Schicht** | Al | 12 |
| **2. Schicht** | SiOx | 58 |
| **3. Schicht** | Al | 36 |
| **4. Schicht** | SiOx | 58 |
| **5. Schicht** | Al | 12 |

| | | |
|---|---|---|
| x= 1,95 - 2,0 | | |

Die nach Aufbereitung (wie in Beispiel 1 beschrieben) erhaltene Pigmentsuspension zeigt mehrfarbig schimmernde Pigmentpartikel höchster Brillanz. Der d₅₀-Wert der Durchgangssummenverteilung der Teilchengröße, wie er mittels herkömmlicher Lasergranulometrie gemäß Herstellerangaben gemessen wird, beträgt 27 µm.

**Vergleichsbeispiel 8:** In Vergleichsbeispiel 8 wird das gleiche Verfahren wie in Beispiel 1 angewandt. Es werden jedoch folgende Schichten mit ihren jeweiligen Schichtdicken aufgedampft.

| | **Aufgedampfter Stoff** | **Schichtdicke [nm]** |
|---|---|---|
| **1. Schicht** | Al | 12 |
| **2. Schicht** | SiOx | 58 |
| **3. Schicht** | Al | 62 |
| **4. Schicht** | SiOx | 58 |
| **5. Schicht** | Al | 12 |

| | | |
|---|---|---|
| x = 1,95 - 2,0 | | |

Die nach Aufbereitung (wie in Beispiel 1 beschrieben) erhaltene Pigmentsuspension zeigt silberfarbig schimmernde Pigmentpartikel. Der d₅₀-Wert der Durchgangssummenverteilung der Teilchengröße, wie er mittels herkömmlicher Lasergranulometrie gemäß Herstellerangaben gemessen wird, beträgt 27,9 µm.

Kommerziell erhältliche dreischichtige Interferenzpigmente sind bisher nicht bekannt und konnten daher auch nicht zu einem Vergleich herangezogen werden.

### Deckungsvergleich:

Das jeweilige Pigment wurde in verschiedenen Pigmentierungshöhen (Gew.% Pigment, bezogen auf das Gesamtgewicht des Nasslacks) im Bereich von 1-16 Gew.-% in jeweils 2 g eines konventionellen Nitrocelluloselackes (Dr. Renger Erco Bronzemischlack 2615e; Fa. Morton) eingerührt. Dabei wurde das Effektpigment vorgelegt und anschließend mit einem Pinsel in den Lack dispergiert.

Der fertige Lack wurde auf einem Rakelabzugsgerät mit einer Nassfilmdicke von 50 µm auf Prüfkarten Nr. 2853 der Fa. Byk Gardner (Kontrastpapier) appliziert. Bei sämtlichen Pigmentierungshöhen wurden die Lackapplikationen auf schwarzem und weißem Hintergrund mit einem Goniospektralphotometer der Fa. Optronic Multiflash, Berlin, Deutschland bei einem Messwinkel von 110° relativ zum Glanzwinkel gemäß Herstellerangaben vermessen.

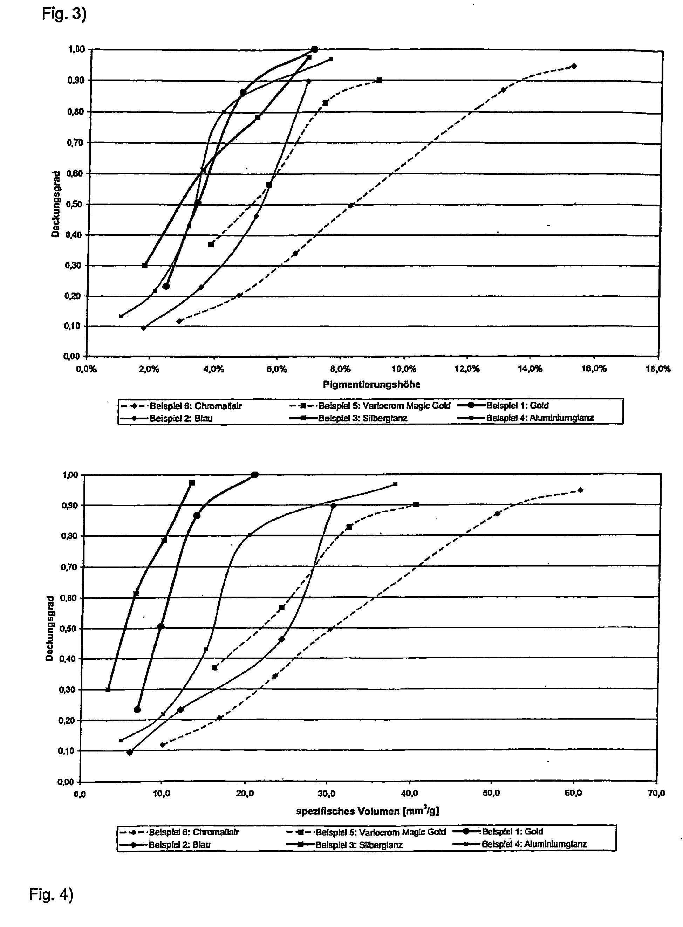

Der Quotient der Helligkeitswerte von schwarzem zu weißem Hintergrund wurde gegen die Pigmentierungshöhe in Gew.-% aufgetragen und ist in Fig.3 zu sehen. Zur besseren Vergleichbarkeit der Pigmente wurden im Hinblick auf deren unterschiedliche Dichten die Pigmenteinwaagen auf die Pigmentvolumina umgerechnet und daraus das spezifische Volumen der Pigmente je Gramm Lack berechnet und in Fig. 4 dargestellt.

Als Deckungskriterium ist ein Wert von größer als 0,98 im Schrifttum für Aluminiumpigmente üblich, wie beispielsweise erwähnt in der EP 0 451 785. Jedoch weisen mehrfach beschichtete Effektpigmente aus dem Stand der Technik naturgemäß aufgrund ihres relativ geringen Metallanteils eine im Vergleich zu reinen Aluminiumpigmenten schlechtere-Deckung auf. Daher kann für diesen Typ von Effektpigmenten bereits bei einem Quotienten von 0,9 von einer guten Deckung ausgegangen werden.

Wie aus Fig.3 und Fig.4 hervorgeht, weisen die erfindungsgemäßen Pigmente aus den Beispielen 1-4 eine deutlich bessere Deckung als die Pigmente der Vergleichsbeispiele 5 und 6 auf. Die deutlich besseren Deckeigenschaften der Pigmente der erfindungsgemäßen Beispiele 1-4 sind auf deren geringe Gesamtdicke zurückzuführen. Die erfindungsgemäßen Pigmente der Beispiele 1-4 haben effektive Gesamtdicken im Bereich von 130 - 225 nm. Die Pigmente gemäß den Vergleichsbeispielen 5 und 6 haben effektive Gesamtdicke von ca. 1 µm. Die Formfaktoren der erfindungsgemäßen Pigmente der Beispiele 1-4 liegen im Bereich von 124-226. Die Pigmente der Vergleichsbeispiele 5 und 6 haben Formfaktoren von unter 20. Mit einem derart niedrigen Formfaktor geht eine schlechte Orientierung im Anwendungsmedium einher, was zu einer geringeren Deckung und auch zu geringen Glanzwerten führt.

**Tabelle 1: Farbmetrische Eigenschaften und Deckvermögensparameter bei L*=110°, weiß/L*110°, schwarz = 0,9 im Überblick**

| Muster | Median -wert d50 [µm] | Deckvermögen | | Farbmetrik, Koloristik | | |
|---|---|---|---|---|---|---|
| | | Pigmentierun gshöhe* bei Deckungsquotient >0,9 [Gew.%) | Spezifisch es Volumen* [mm³/g] | Glanz 60°* | Glanz 20°* | Subjektiver Eindruck |
| Erfindungsgem. Beispiel 1 | 29,8 | 4,8 | 13,7 | 133 | 52 | Goldfarbener glänzender Rakelabzug ohne Farbflop |
| Erfindungsgem. Beispiel 2 | 27,8 | 6,9 | 30,3 | 28 | 6 | Blaufarbener glänzender Rakelabzug ohne wesentlichen Farbflop |
| Erfindungsgem. Beispiel 3 | 27,4 | 6,9 | 16,3 | 147 | 61 | Stark glänzender silberfarbener Rakelabzug |
| Erfindungsgem. Beispiel 4 | 28,6 | 4,2 | 20,1 | 129 | 47,2 | silbergrau glänzender Rakelabzug |
| Vergl. Beispiel 5 (Variocrom Magic Gold) | 17 | 9,1 | 34,8 | 11 | 5 | Rakelabzug mit starkem Farbflop von goldgelb nach rostbraun abkippend |
| Vergl. Beispiel 6 (Chromaflair) | 19 | 13,9 | 54,1 | 8 | 2 | Rakelabzug mit starkem Farbflop von blau nach grün nach violett abkippend |
| Erfindungsgem. Beispiel 7 | 27 | 5,2 | 23,9 | 135 | 53 | Rakelabzug mit starkem Farbflop von violet nach goldgrün abkippend |
| Vergl. Beispiel 8 | 27,9 | 6,1 | 28,2 | 140 | 57 | Rakelabzug ohne wesentlichen Farbflop mit silbernem Aussehen |

Der Vergleich des erfindungsgemäßen Beispiels 7 mit dem Vergleichsbeispiel 8 zeigt deutlich den Effekt der semitransparenten zentralen Absorberschicht. Bei Beispiel 7 wird ein Pigment mit deutlichem Farbflop erhalten, da aufgrund der Teiltransparenz der zentralen Al-Schicht auch die unteren SiOₓ/Al-Schichten zum Farbeindruck beitragen können. Bei Vergleichsbeispiel 8 hingegen ist die zentrale Al-Schicht opak und die geringe Schichtdicke von 58 nm der SiOₓ-Schicht reicht für Interferenzeffekte nicht aus.

### Farbmetrische Eigenschaften:

Zum Vergleich der farbmetrischen Eigenschaften wurden die in Tabelle 1 "Deckungsvergleich" beschriebenen Nitrolackapplikationen herangezogen. Hierzu wurden Applikationen mit den in Tabelle 1 aufgeführten Pigmentierungshöhen auf schwarzem Hintergrund verwendet. Die Messung erfolgte mit einem Goniospektralphotometer der Fa. Optronic Multiflash, Berlin gemäß Herstellerangaben. Bei einem konstanten Einstrahlwinkel von 45° wurde bei acht verschiedenen Winkeln relativ zum Glanzwinkel gemessen. Die Messwinkel betrugen: 15°, 20°, 25°, 45°, 55°, 70°, 75° und 110°. Mit einer derartigen Messgeometrie lassen sich bei weitem nicht alle Farbeffekte von Effektpigmenten messen. Insbesondere Interferenzpigmente und -effekte sind mit einer derartigen Messgeometrie nicht sehr gut erfassbar (vergl. auch W.R. Cramer und P.W. Gabel, *farbe+ lack* **109** (2003) 78). Das heißt, der vom Betrachter empfundene subjektive Eindruck wird durch Messwerte nur annährend wiedergegeben.

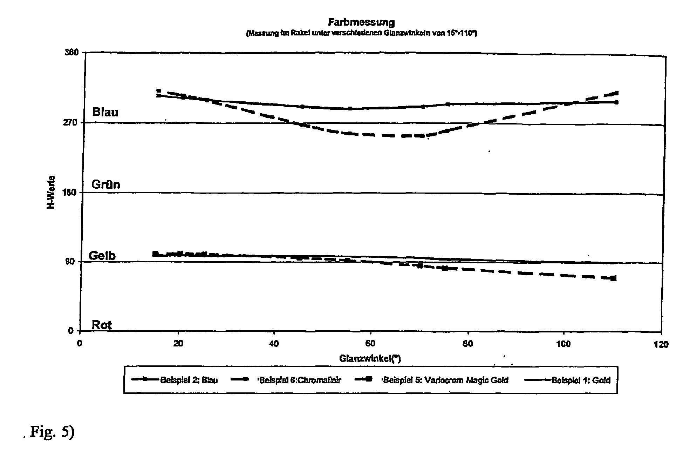

In Fig. 5 sind die H*- Werte (Farbort, Hue) sämtlicher erfindungsgemäßer Beispiele 1 bis 4 und der Vergleichsbeispiele 5 und 6 aus dem L*C*H*-System gegen den Beobachtungswinkel aufgetragen. Bei den erfindungsgemäßen Pigmenten aus Beispiel 2 ist eine leichte Farbverschiebung zu beobachten, die Pigmente des Beispiels 1 weisen über den gesamten Effektwinkelbereich keine Farbverschiebung auf.

Die Pigmente des Vergleichsbeispiels 6 weisen einen deutlichen Farbflop auf, bei der der Farbort über einen weiten Bereich des Differenzwinkels variiert. Wie aus Tabelle 1 hervorgeht, weisen die Pigmente gemäß Vergleichsbeispiel 5 eine Farbverschiebung von goldgelb bis ins Rostbraune auf.

Dies stellt im Vergleich zum erfindungsgemäßen Pigment aus Beispiel 1 keine attraktive Farbverschiebung dar. Darüber hinaus weist das in Vergleichsbeispiel 5 verwendete Pigment eine deutliche Pigmentgesamtdicke von 800 nm auf.

### Erfindungsgemäßes Beispiel 9:

Analog zu Beispiel 1 wurde ein fünfschichtiges Effektpigment mit folgendem Schichtaufbau hergestellt:

| | Al | SiOx | Al | SiOx | Al |
|---|---|---|---|---|---|
| Schichtdicken [nm] | 9 | 82 | 21 | 82 | 9 |

| | | | | | |
|---|---|---|---|---|---|
| x = 1,95 - 2,0 | | | | | |

### Erfindungsgemäßes Beispiel 10:

Analog zu Beispiel 1 wurde ein dreischichtiges Effektpigment mit folgendem Schichtaufbau hergestellt:

| | SiOx | Al | SiOx |
|---|---|---|---|
| Schichtdicken [nm] | 82 | 15 | 82 |

| | | | |
|---|---|---|---|
| x = 1,95 - 2,0 | | | |

Die Effektpigmente der erfindungsgemäßen Beispiele 9 und 10 wurden in einer 1 Gew.%-igen Pigmentierung in einen Nagellack eingerührt. Der Nagellack, hatte folgende Zusammensetzung:

| **Stoff** | **Konzentration in Gew.-%** |
|---|---|
| Nitrocellulose | 15 |
| Ethylacetat | 21,15 |
| n-Butylacetat | 39 |
| Isopropylalkohol | 8 |
| Polyesterbindemittel | 9 |
| Dibutylphthatat | 5 |
| Campher | 2,0 |
| Stearalkonium Bentonit | 0,85 |
| Pigmente gemäß erfindungsgemäßem Beispiel 9 bzw. 10 | 1,0 |

Der Nagellack, der Pigmente gemäß dem erfindungsgemäßen Beispiel 9 enthält, hat nach einer Applikation auf echte oder unechte Fingemägel ein farbstarkes gold-brillantes Aussehen.

Der Nagellack, der Pigmente gemäß dem erfindungsgemäßen Beispiel 10 enthält, hat nach einer Applikation auf echte oder unechte Fingernägel ein stahlgrau hochglänzendes Aussehen.

Beide Nagellackapplikationen zeigten einen hochglänzenden metallischen Farbton in der Art eines "flüssigen Metalls", d.h. visuell erscheint die Nagellackierung durchgängig geschlossen, ohne dass individuelle Pigmentteilchen sichtbar wären.

Die vorliegende Erfindung stellt mithin metallisch glänzende farbige Effektpigmente bereit.

Der Vorteil des erfindungsgemäßen Pigmentes liegt in seiner metallisch glänzenden Farbigkeit und seiner Ergiebigkeit, d.h. seinem hohen Deckvermögen. Seine auf interferenz und Reflexions-/Transmissionseigenschaften basierende Farbigkeit wird nicht durch wesentliche Farbtonverschiebungen beeinträchtigt Es lassen sich Pigmente mit und ohne Farbflop über einem breiten Farbspektrum herstellen, wobei die Pigmentgesamtdicke sehr gering gehalten werden kann. Da alle beteiligten Schichten mit ihren jeweiligen Schichtdicken farbgebend sind, ist überraschenderweise ein variantenreiches Farbdesign bei sehr niedriger effektiver Pigmentgesamtdicke möglich.

Die das optische Verhalten bestimmenden Schichten sind über gängige PVD-Aufdampfverfahren hergestellt. Bei der Pigmentherstellung wird die im Aufdampfverfahren hergestellte Schichtstruktur zerkleinert. Das Aufbringen einer Korrosionsschutzschicht und/oder modifizierender zusätzlicher Schichten ist sowohl über Vakuumverfahren als auch naßchemische Beschichtung möglich.

## Patentansprüche

1. Mehrschichtiges PVD-Effektpigment,
**dadurch gekennzeichnet,**
**dass** das mehrschichtige PVD-Effektpigment aus folgenden Schichtenfolge besteht:
(d) semitransparente Schicht,
(a) Dielektrikumschicht mit einer geometrischen Dicke von 25 nm bis maximal 180 nm,
(b) metallische Absorberschicht mit einer geometrischen Dicke von maximal 35 nm,
(c) Dielektrikumschicht mit einer geometrischen Dicke von 25 nm bis maximal 180 nm,
(e) semitransparente Schicht,
wobei die Schichten unmittelbar aufeinander folgen und die Dielektrikumschichten (a) und (c) gleich oder voneinander verschieden sind und wobei die semitransparenten Schichten (d) und (e) optional sind und unmittelbar auf den Dielektrikumschichten (a) und (e) auf gebracht sind und gleich oder voneinanden verschieden sind und wobei das mehrschichtige PVD-Effektpigment mit einer umbüllenden Korrosionsschutzschicht und/oder Inhibitorschicht versehen sein kann.

2. Mehrschichtiges PVD-Effektpigment nach einem der vorstehenden Ansprüche,
**dadurch gekennzeichnet,**
**dass** die metallische Absorberschicht eine geometrische Dicke von maximal 30 nm, vorzugsweise von 2 nm bis 20 nm, besitzt.

3. Mehrschichtiges PVD-Effektpigment nach einem der vorstehenden Ansprüche,
**dadurch gekennzeichnet,**
**dass** die Dielektrikumschichten (a) und (c) eine geometrische Dicke von jeweils maximal 150 nm aufweisen.

4. Mehrschichtiges PVD-Effektpigment nach einem der vorstehenden Ansprüche,
**dadurch gekennzeichnet,**
**dass** die Dielektrikumschichten (a) und (c) eine geometrische Dicke in einem Bereich von jeweils 30 nm bis maximal 100 nm aufweisen.

5. Mehrschichtiges PVD-Effektpigment nach einem der vorstehenden Ansprüche,
**dadurch gekennzeichnet,**
**dass** die Metallschicht Metalle, die aus der Gruppe, die aus Aluminium, Silber, Kupfer, Gold, Chrom, Elsen, Titan, Platin, Palladium, Nickel, Kobalt, Niob, Zinn, Zink, Rhodium, deren Mischungen, Legierungen und Kombinationen besteht, ausgewählt werden, enthält oder aus diesen besteht.

6. Mehrschichtiges PVD-Effektpigment nach einem der vorstehenden Ansprüche,
**dadurch gekennzeichnet,**
**dass** das Dielektrikum aus der Gruppe, die aus Metallfluoriden, Metalloxiden, Metallsulfiden, Metallnitriden, Metallcarbiden, deren Mischungen und Kombinationen besteht, ausgewählt wird.

7. Mehrschichtiges PVD-Effektpigment nach einem der vorstehenden Ansprüche 1 bis 5,
**dadurch gekennzeichnet,**
**dass** das Dielektrikum aus der Gruppe, die aus SiO₂, SiOₓ, wobei x 1,5 bis 2 ist, Al₂O₃, B₂O₃, TiO₂, ZrO₂, MgF₂, deren Mischungen und Kombinationen besteht, ausgewählt wird.

8. Mehrschichtiges PVD-Effektpigment nach einem der Ansprüche 1 bis 7,
**dadurch gekennzeichnet,**
**dass** die semitransparenten Schichten (d) und (e) aus einem Material mit einem Brechungsindex im optischen Bereich von mehr als 2,2 und/oder aus einem Metall bestehen.

9. Mehrschichtiges PVD-Effektpigment nach Anspruch 8,
**dadurch gekennzeichnet,**
**dass** die semitransparenten Schichten (d) und (e) Metalle, die aus der Gruppe, die aus Aluminium, Silber, Kupfer, Gold, Chrom, Eisen, Titan, Platin, Palladium, Nickel, Kobalt, Niob, Zinn, Zink, Rhodium, deren Mischungen, Legierungen und Kombinationen besteht, ausgewählt werden, enthalten oder daraus bestehen.

10. Mehrschichtiges PVD-Effektpigment nach Anspruch 1,
**dadurch gekennzeichnet,**
**dass** das mehrschichtige PVD-Effektpigment folgende Schichtenfolge umfasst:
(a) Dielektrikumschicht mit einer geometrischen Dicke von 25 nm bis maximal 180 nm,
(b) metallische Absorberschicht mit einer geometrischen Dicke von 2 nm bis 20 nm,
(c) Dielektrikumschicht mit einer geometrischen Dicke von 25 nm bis maximal 180 nm,
wobei die Schichten unmittelbar aufeinander folgen und das mehrschichtige PVD-Effektpigment ein glänzendes graues bis schwarzes Erscheinungsbild aufweist.

11. Mehrschichtiges PVD-Effektpigment nach einem der vorstehenden Ansprüche,,
**dadurch gekennzeichnet,**
**dass** das mehrschichtige PVD-Effektpigment mit einer umhüllenden, auch die metallischen Bruchkanten vollständig bedeckenden, Korrosionsschutzschicht und/oder Inhibitorschicht versehen ist.

12. Mehrschichtiges PVD-Effektpigment nach einem der vorhergehenden Ansprüche,
**dadurch gekennzeichnet,**
**dass** das mehrschichtige PVD-Effektpigment mit einer umhüllenden, auch die metallischen Bruchkanten vollständig bedeckenden, Korrosionsschufzschicht aus einer nasschemisch aufgebrachten SiO₂-Schicht versehen ist.

13. Mehrschichtiges PVD-Effektpigment nach Anspruch 12,
**dadurch gekennzeichnet,**
**dass** die SiO₂-Schicht organisch-chemisch, vorzugsweise mit wenigstens einem Silan, oberflächenmodifizied ist.

14. Verfahren zur Herstellung eines mehrschichtigen PVD-Effektpigmentes nach einem der vorhergehenden Ansprüche 1 bis 7 oder 10, **dadurch gekennzeichnet,**
**dass** es folgende Schritte umfaßt:
(a) Aufbringen der Dielektrikumschicht (a) mittels PVD auf ein geeignetes Trägermaterial,
(b) Aufbringen der metallischen Absorberschicht (b) mittels PVD auf die in Schritt (a) aufgebrachte Dielektrikumschicht (a),
(c) Aufbringen der Dielektrikumschicht (c) mittels PVD auf die in Schritt (b) aufgebrachte Metallschicht (b),
(d) Abtrennen des aufgebrachten Schichtpaketes von dem Trägermaterial,
(e) Zerkleinern der Schichtpakete auf eine gewünschte Pigmentpartikelgröße.

15. Verfahren zur Herstellung eines mehrschichtigen PVD-Effektpigmentes nach einem der vorhergehenden Ansprüche 1 bis 10,
**dadurch gekennzeichnet,**
**dass** es folgende Schritte umfaßt:
a) Aufbringen der semitransparenten Schicht (d) mittels PVD auf ein geeignetes Trägermaterial,
b) Aufbringen der Dielektrikumschicht (a) mittels PVD auf die in Schritt
a) aufgebrachte semitransparente Schicht (d),
e) Aufbringen der metallischen Absorberschicht (b) mittels PVD auf die in Schritt b) aufgebrachte Dielektrikumschicht (a),
f) Aufbringen der Dielektrikumschicht (c) mittels PVD auf die in Schritt c) aufgebrachte Metallschicht (b),
e) Aufbringen der semitransparenten Schicht (e) mittels PVD auf die in Schritt d) aufgebrachte Dielektrikumschicht (c)
g) Abtrennen des aufgebrachten Schichtpaketes von dem Trägermaterial,
h) Zerkleinern der Schichtpakete auf eine gewünschte Pigmentpartikelgröße.

16. Verfahren nach Anspruch 14 oder 15,
**dadurch gekennzeichnet,**
**daß** die nach dem Zerkleinern erhaltenen Pigmentpartikel naßchemisch mit einer SiO₂-Schicht versehen werden.

17. Verfahren nach Anspruch 16,
**dadurch gekennzeichnet,**
**daß** die SiO₂-Beschichtung organochemisch, vorzugsweise mit wenigstens einem Silan, oberflächenmodifiziert werden.

18. Verwendung eines PVD-Effektpigmentes nach einem der Ansprüche 1 bis 13 in Farben, Lacken, Coatings, Druckfarben, Kunststoffen, kosmetischen Zubereitungen, Pigmentpräparationen, im Sicherheitsdruck oder Wertpapierdruck.

19. Verwendung nach Anspruch 18,
**dadurch gekennzeichnet,**
**daß** die kosmetischen Zubereitungen aus der Gruppe, die aus Nagellack, Lippenstift, Make-up, Haarpflegemittel, Hautpflegemittel, Mascara, Lidschatten, Eyeliner, Rouge, Parfum, Eau de Toilette, Puder (lose oder gepresst), Tattooformulierungen besteht, ausgewählt werden.

20. Beschichtungsmittel,
**dadurch gekennzeichnet,**
**daß** das Beschichtungsmittel ein PVD-Effektpigment nach einem der Ansprüche 1 bis 13 enthält.

21. Beschichtungsmittel nach Anspruch 20,
**dadurch gekennzeichnet,**
**daß** das Beschichtungsmittel aus der Gruppe, die aus Farben, Lacken, Coatings, Druckfarben, Kunststoffen, kosmetischen Zubereitungen, vorzugsweise Nagellack, und Pigmentpräparationen besteht, ausgewählt wird.

22. Gegenstand,
**dadurch gekennzeichnet,**
**daß** der Gegenstand mit einem PVD-Effektpigment nach einem der Ansprüche 1 bis 13 oder einem Beschichtungsmittel nach Anspruch 20 oder 21 versehen ist.

## Claims

1. Multi-layered PVD effect pigment,
**characterised in that**
the multi-layered effect pigment is made up of the following sequence of layers:
(d) a semi-transparent layer,
(a) a dielectric coating layer with a geometric thickness of 25 nm to 180 mn at most,
(b) a metallic absorber layer with a geometric thickness of 35 nm at most,
(c) a dielectric coating layer with a geometric thickness of 25 nm to 180 nm at most,
(e) a semi-transparent layer,
and the layers directly adjoin one another and the dielectric coating layers (a) and (c) are identical or different from one another and the semi-transparent layers (d) and (e) are optional and are applied directly onto the dielectric coating layers (a) and (c) and are identical or different from one another, and the multi-layered PVD effect pigment may be provided with an enclosing anti-corrosion layer and/or inhibitor layer.

2. Multi-layered PVD effect pigment as claimed in one of the preceding claims,
**characterised in that**
the metallic absorber layer has a geometric thickness of 30 nm at most, preferably 2 nm to 20 nm.

3. Multi-layered PVD effect pigment as claimed in one of the preceding claims,
**characterised in that**
the dielectric coating layers (a) and (c) have a geometric thickness of 150 nm at most respectively.

4. Multi-layered PVD effect pigment as claimed in one of the preceding claims,
**characterised in that**
the dielectric coating layers (a) and (c) have a geometric thickness in a range respectively of 30 nm to 100 nm at most.

5. Multi-layered PVD effect pigment as claimed in one of the preceding claims,
**characterised in that**
the metallic layer contains or comprises metals selected from the group comprising aluminium, silver, copper, gold, chromium, iron, titanium, platinum, palladium, nickel, cobalt, niobium, tin, zinc, rhodium, mixtures, alloys and combinations thereof.

6. Multi-layered PVD effect pigment as claimed in one of the preceding claims,
**characterised in that**
the dielectric is selected from the group comprising metal fluorides, metal oxides, metal sulphides, metal nitrides, metal carbides, mixtures and combinations thereof.

7. Multi-layered PVD effect pigment as claimed in one of preceding claims 1 to 5,
**characterised in that**
the dielectric is selected from the group comprising SiO₂, SiOₓ where x is 1.5 to 2, Al₂O₃, B₂O₃, TiO₂, ZrO₂, MgF₂, mixtures and combinations thereof.

8. Multi-layered PVD effect pigment as claimed in one of claims 1 to 7,
**characterised in that**
the semi-transparent layers (d) and (e) are made from a material with a refractive index in the optical range of more than 2.2 and/or a metal.

9. Multi-layered PVD effect pigment as claimed in claim 8,
**characterised in that**
the semi-transparent layers (d) and (e) contain or comprise metals selected from the group comprising aluminium, silver, copper, gold, chromium, iron, titanium, platinum, palladium, nickel, cobalt, niobium, tin, zinc, rhodium, mixtures, alloys and combinations thereof.

10. Multi-layered PVD effect pigment as claimed in as claimed in claim 1,
**characterised in that**
the multi-layered effect pigment comprises the following sequence of layers:
(a) a dielectric coating layer with a geometric thickness of 25 nm to 180 nm at most,
(b) a metallic absorber layer with a geometric thickness of 2 nm to 20 nm,
(c) a dielectric coating layer with a geometric thickness of 25 nm to 180 nm at most,
and the layers directly adjoin one another, and the multi-layered PVD effect pigment has a lustrous grey to black appearance.

11. Multi-layered PVD effect pigment as claimed in one of the preceding claims,
**characterised in that**
the multi-layered PVD effect pigment is provided with an enclosing anti-corrosion layer and/or inhibitor layer which also completely covers the metallic fragment edges.

12. Multi-layered PVD effect pigment as claimed in one of the preceding claims,
**characterised in that**
the multi-layered PVD effect pigment is provided with an enclosing anti-corrosion layer comprising an SiO₂ layer applied by a wet chemical process which also completely covers the metallic fragment edges.

13. Multi-layered PVD effect pigment as claimed in claim 12,
**characterised in that**
the SiO₂ layer is organically-chemically surface modified, preferably with at least one silane.

14. Method of producing a multi-layered effect pigment as claimed in one of preceding claims 1 to 7 or 10,
**characterised in that**
it comprises the following steps:
(a) applying the dielectric coating layer (a) to a suitable base material by means of PVD,
(b) applying the metallic absorber layer (b) to the dielectric coating layer (a) applied in step (a) by means of PVD,
(c) applying the dielectric coating layer (c) to the metallic layer (b) applied in step (b) by means of PVD,
(d) separating the applied layer packet from the base material,
(e) grinding the layer packets to a desired pigment particle size.

15. Method of producing a multi-layered PVD effect pigment as claimed in one of preceding claims 1 to 10,
**characterised in that**
it comprises the following steps:
a) applying the semi-transparent layer (d) to a suitable base material by means of PVD,
b) applying the dielectric coating layer (a) to the semi-transparent layer (d) applied in step a) by means of PVD,
e) applying the metallic absorber layer (b) to the dielectric coating layer (a) applied in step b) by means of PVD,
f) applying the dielectric coating layer (c) to the metallic layer (b) applied in step c) by means of PVD,
e) applying the semi-transparent layer (e) to the dielectric coating layer (c) applied in step d) by means of PVD,
g) separating the applied layer packet from the base material,
h) grinding the layer packet to a desired pigment particle size.

16. Method as claimed in claim 14 or 15,
**characterised in that**
the pigment particles obtained after the grinding process are provided with an SiO₂ layer by a wet chemical process.

17. Method a claimed in claim 16,
**characterised in that**
the SiO₂ layer is organically-chemically surface modified, preferably with at least one silane.

18. Use of a PVD effect pigment as claimed in one of claims 1 to 13 in paints, varnishes, coatings, printing inks, plastics, cosmetic preparations, pigment preparations, in security printing or bond printing.

19. Use as claimed in claim 18,
**characterised in that**
the cosmetic preparations are selected from the group comprising nail varnish, lipstick, make-up, hair care preparations, skin care preparations, mascara, eye shadow, eye liner, blusher, perfume, toilet water, powder (loose or compacted), tattoo formulations.

20. Coating means,
**characterised in that**
the coating means contains a PVD effect pigment as claimed in one of claims 1 to 13.

21. Coating means as claimed in claim 20,
**characterised in that**
the coating means is selected from the group comprising paints, varnishes, coatings, printing inks, plastics, cosmetic preparations, preferably nail varnish, and pigment preparations.

22. Object,
**characterised in that**
the object is provided with a PVD effect pigment as claimed in one of claims 1 to 13 or a coating means as claimed in claim 20 or 21.

## Revendications

1. Pigment multicouche à effets pour PVD, **caractérisé en ce que** le pigment multicouche à effets pour PVD est constitué de la séquence de couches suivante :
(a) couche diélectrique ayant une épaisseur géométrique de 25 nm à un maximum de 180 nm,
(b) couche d'un absorbant métallique, ayant une épaisseur géométrique maximale de 35 nm,
(c) couche diélectrique ayant une épaisseur géométrique de 25 nm à un maximum de 180 nm,
(d) couche semi-transparente,
(e) couche semi-transparente,
les couches se suivant immédiatement les unes les autres, et les couches diélectriques (a) et (c) étant identiques ou différentes l'une de l'autre, et les couches semi-transparentes (d) et (e) étant en option et appliquées directement sur les couches diélectriques (a) et (c), et étant identiques ou différentes l'une de l'autre, et le pigment multicouche à effets pour PVD pouvant être pourvu d'une couche d'enrobage de protection anti-corrosion et/ou d'une couche d'un inhibiteur.

2. Pigment multicouche à effets pour PVD selon l'une des revendications précédentes, **caractérisé en ce que** la couche d'un absorbant métallique a une épaisseur géométrique au maximum de 30 nm, de préférence de 2 à 20 nm.

3. Pigment multicouche à effets pour PVD selon l'une des revendications précédentes, **caractérisé en ce que** chacune des couches diélectriques (a) et (c) a une épaisseur géométrique au maximum de 150 nm.

4. Pigment multicouche à effets pour PVD selon l'une des revendications précédentes, **caractérisé en ce que** chacune des couches diélectriques (a) et (c) a une épaisseur géométrique comprise dans la plage de 30 nm à un maximum de 100 nm.

5. Pigment multicouche à effets pour PVD selon l'une des revendications précédentes, **caractérisé en ce que** la couche métallique contient des métaux qui sont choisis dans le groupe consistant en l'aluminium, l'argent, le cuivre, l'or, le chrome, le fer, le titane, le platine, le palladium, le nickel, le cobalt, le niobium, l'étain, le zinc, le rhodium, les mélanges, alliages et combinaisons de ceux-ci, ou en est constitué.

6. Pigment multicouche à effets pour PVD selon l'une des revendications précédentes, **caractérisé en ce que** le diélectrique est choisi dans le groupe consistant en les fluorures métalliques, les oxydes métalliques, les sulfures métalliques, les nitrures métalliques, les carbures métalliques, les mélanges et combinaisons de ceux-ci.

7. Pigment multicouche à effets pour PVD selon l'une des revendications précédentes 1 à 5, **caractérisé en ce que** le diélectrique est choisi dans le groupe consistant en SiO₂, SiOₓ où x vaut 1,5 à 2, Al₂O₃, B₂O₃, TiO₂, ZrO₂, MgF₂, les mélanges et combinaisons de ceux-ci.

8. Pigment multicouche à effets pour PVD selon l'une des revendications 1 à 7, **caractérisé en ce que** les couches semi-transparentes (d) et (e) sont constituées d'un matériau ayant un indice de réfraction dans le domaine optique supérieur à 2,2, et/ou d'un métal.

9. Pigment multicouche à effets pour PVD selon la revendication 8, **caractérisé en ce que** les couches semi-transparentes (d) et (e) contiennent des métaux qui sont choisis dans le groupe consistant en l'aluminium, l'argent, le cuivre, l'or, le chrome, le fer, le titane, le platine, le palladium, le nickel, le cobalt, le niobium, l'étain, le zinc, le rhodium, les mélanges, alliages et combinaisons de ceux-ci, ou en sont constituées.

10. Pigment multicouche à effets pour PVD selon la revendication 1, **caractérisé en ce que** le pigment multicouche à effets pour PVD comprend la séquence de couches suivante :
(a) couche diélectrique ayant une épaisseur géométrique de 25 nm à un maximum de 180 nm,
(b) couche d'un absorbant métallique, ayant une épaisseur géométrique de 2 à 20 nm,
(c) couche diélectrique ayant une épaisseur géométrique de 25 nm à un maximum de 180 nm,
les couches se suivant immédiatement les unes les autres, et le pigment multicouche à effets pour PVD présentant un aspect brillant, gris à noir.

11. Pigment multicouche à effets pour PVD selon l'une des revendications précédentes, **caractérisé en ce que** le pigment multicouche à effets pour PVD est pourvu d'une couche de protection anti-corrosion et/ou d'une couche d'un inhibiteur, enrobante, recouvrant aussi en totalité les lignes de rupture métalliques.

12. Pigment multicouche à effets pour PVD selon l'une des revendications précédentes, **caractérisé en ce que** le pigment multicouche à effets pour PVD est pourvu d'une couche de protection anti-corrosion enrobante, qui recouvre aussi, complètement, les lignes de rupture métalliques, constituée d'une couche de SiO₂ appliquée par voie chimique humide.

13. Pigment multicouche à effets pour PVD selon la revendication 12, **caractérisé en ce que** la couche de SiO₂ a subi une modification superficielle organochimique, de préférence avec au moins un silane.

14. Procédé de fabrication d'un pigment multicouche à effets pour PVD selon l'une des revendications précédentes 1 à 7 ou 10, **caractérisé en ce qu'**il comprend les étapes suivantes :
(a) application de la couche diélectrique (a) par PVD sur un matériau support approprié,
(b) application de la couche d'un absorbant métallique (b) par PVD sur la couche diélectrique (a) appliquée dans l'étape (a),
(c) application de la couche diélectrique (c) par PVD sur la couche métallique (b) appliquée dans l'étape (b),
(d) séparation, d'avec le matériau support, du système de couches appliqué,
(e) broyage des systèmes de couches jusqu'à une granulométrie pigmentaire souhaitée.

15. Procédé de fabrication d'un pigment multicouche à effets pour PVD selon l'une des revendications précédentes 1 à 10, **caractérisé en ce qu'**il comprend les étapes suivantes :
a) application de la couche semi-transparente (d) par PVD sur un matériau support approprié,
b) application de la couche diélectrique (a) par PVD sur la couche semi-transparente (d) appliquée dans l'étape a),
e) application de la couche d'un absorbant métallique (b) par PVD sur la couche diélectrique (a) appliquée dans l'étape b),
f) application de la couche diélectrique (c) par PVD sur la couche métallique (b) appliquée dans l'étape c),
e) application de la couche semi-transparente (e) par PVD sur la couche diélectrique (c) appliquée dans l'étape d),
g) séparation, d'avec le matériau support, du système de couches appliqué,
h) broyage des systèmes de couches jusqu'à une granulométrie pigmentaire souhaitée.

16. Procédé selon la revendication 14 ou 15, **caractérisé en ce que** les particules pigmentaires obtenues après le broyage sont pourvues d'une couche de SiO₂ par voie chimique humide.

17. Procédé selon la revendication 16, **caractérisé en ce que** le revêtement de SiO₂ subit une modification superficielle par voie organochimique, de préférence avec au moins un silane.

18. Utilisation d'un pigment à effets pour PVD selon l'une des revendications 1 à 13 dans des peintures, des vernis, des revêtements, des encres d'imprimerie, des matières plastiques, des préparations cosmétiques, des préparations pigmentaires, en impression de sécurité ou en impression de papiers de valeur.

19. Utilisation selon la revendication 18, **caractérisée en ce que** les préparations cosmétiques sont choisies dans le groupe constitué des vernis à ongles, des bâtons à lèvres, des produits pour maquillage, des produits pour les soins des cheveux, des produits pour les soins de la peau, du mascara, des ombres à paupières, des contours des yeux, des rouges à joues, des parfums, des eaux de toilette, des poudres (libres ou compactes), des formulations pour tatouage.

20. Produit de revêtement, **caractérisé en ce que** le produit de revêtement contient un pigment à effets pour PVD selon l'une des revendications 1 à 13.

21. Produit de revêtement selon la revendication 20, **caractérisé en ce que** le produit de revêtement est choisi dans le groupe constitué des peintures, des vernis, des revêtements, des encres d'imprimerie, des matières plastiques, des préparations cosmétiques, de préférence les vernis à ongles, et des préparations pigmentaires.

22. Objet, **caractérisé en ce que** l'objet est pourvu d'un pigment à effets pour PVD selon l'une des revendications 1 à 13 ou d'un produit de revêtement selon la revendication 20 ou 21.
